Europäisches Patentamt

European Patent Office

Office européen des brevets

(11) Publication number: **0 253 775**
A1

## EUROPEAN PATENT APPLICATION

(21) Application number: 87830207.4

(22) Date of filing: 01.06.87

(51) Int. Cl.⁴: **B 65 G 1/12**

(30) Priority: 11.07.86 IT 6756086

(43) Date of publication of application: 20.01.88
Bulletin 88/3

(84) Designated Contracting States: AT BE CH DE ES FR GB
GR IT LI LU NL SE

(71) Applicant: PIANELLI & TRAVERSA S.a.s., Corso IV
Novembre 53, I-10090 Cascine Vica Torino (IT)

(72) Inventor: Grande, Dario, Corso Trapani 183,
I-10141 Torino (IT)

(74) Representative: Bosotti, Luciano et al, c/o
Jacobacci-Casetta & Perani S.p.A. Via Alfieri, 17,
I-10121 Torino (IT)

(54) Device for automatic withdrawal and insertion of load units, particularly for automatic stores.

(57) The service comprises an endless flexible element (10) which is slidable in two senses and has an upper entrainment pass (12) and a lower return pass (13). A motor (14) can drive the movement of the flexible element (10) in each of the two senses selectively. First (18a, 18b) and second (19a, 19b) pairs of hook members are mounted on the flexible element (10), each of which includes a first hook member (18a, 19a) which can cooperate in pulling relationship with the handle (M) located on one side of the load unit and a second hook element (18b, 19b) which can cooperate in pushing relationship with the opposite side of the same load unit. The entrainment of the cassette by the flexible element (10) is thus ensured even when the pulling relationship between the first hook element (18a, 19b) and the handle (M) engaged thereby is fails.

Its preferred application is to automatic stores.

- 1 -

## Device for the automatic withdrawal and insertion of load units, particularly for automatic stores

The present invention relates to devices for the automatic withdrawal and insertion of load units and relates particularly to a device for moving load units (such as cassettes) having two opposite sides provided with respective handles in a predetermined direction on a plane of sliding for withdrawal from and insertion into storage compartments.

In realising devices of the type specified, which can be used, for example, in automatic stores for keeping documents, one must take account of various factors.

In the first place, it is important for the device to be able to act in two senses, that is, to withdraw the load unit on one side of the plane of sliding and to insert it or discharge it, if necessary, on the opposite side.

It is also essential for the device to be structurally simple, without requiring, for example, the use of several motors or electromagnetic clutches to achieve the two-directional operation.

Devices have already been proposed in the past which partially meet some of the requirements explained above. However, a device which satisfies these requirements completely has not been made until now.

The object of the present invention is to provide such a device.

According to the present invention, this object is achieved by a device for withdrawing and inserting load units of the type specified above, characterised in that it comprises:

- 2 -

- an endless flexible element slidable in two senses
and having an upper entrainment pass oriented in the
predetermined direction and extending adjacent the
sliding plane, and a lower return pass extending in a
position spaced from the sliding plane,
- a motor for driving the movement of the flexible
element selectively in each of the two senses, and
- at least one first and one second pair of hook
elements fixed to the flexible element, each pair
comprising a first hook element which can engage a
handle provided on one of the opposite sides of the
load unit which is being moved, and a second hook
element which can cooperate in pushing relationship
with the other of the opposite sides of the same load
unit.

The invention will now be described, purely by way of
non-limiting example, with reference to the appended
drawings, in which:

Figure 1 is a partially cut-away and sectioned plan
view of a conveyor unit for load units of automatic
stores, provided with a withdrawal or insertion device
according to the invention,

Figure 2 is a section taken on the line II-II of Figure
1, and

Figures 3 to 6 illustrate the operation of the device
according to the invention schematically with reference
to one of the two possible senses of movement.

In the drawings, a conveyor unit is generally indicated
1 and is usable in a system for the withdrawal of load
units, such as the cassettes of an automatic store, for

- 3 -

example, an automatic store for keeping documents, from respective storage compartments and their invention therein.

The movement of the conveyor unit 1 relative to the storage compartments (not illustrated in their entirety) may be achieved, if necessary, by different means of known type.

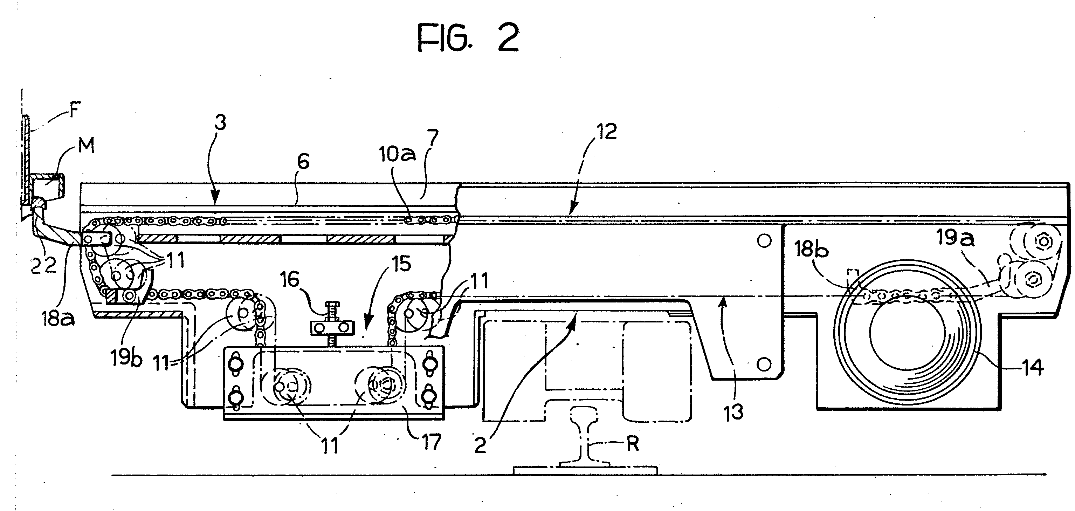

Figure 2 of the appended drawings relates, purely by way of example, to a conveyor unit which can move along a rail R located in a fixed or movable position relative to the structure of the store. Alternatively, the unit 1 may be mounted on an automatic arm (robot) programmed so as to be able to make the unit itself face the storage compartment from which a cassette is to be withdrawn or into which it is to be inserted.

The unit 1 can be seen to include generally a lower side 2 and an upper plane 3 of sliding which is approximately rectangular in plan with two opposite end sides 4 and 5.

The distance between the sides 4 and 5 substantially identifies the overall length of the plane 3 of sliding along which the cassettes are moved (in this case, in a direction generally perpendicular to the direction of the rail R).

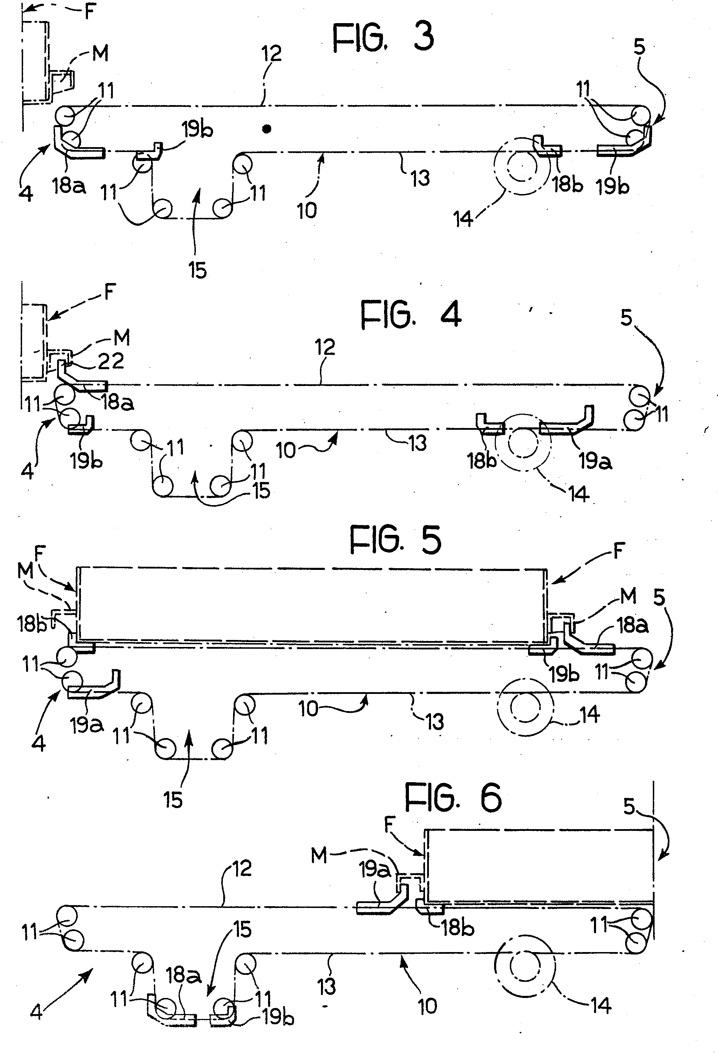

In Figures 3 to 6, the profile of one of these cassettes is indicated schematically in broken outline. Each cassette can be seen to have generally two opposite sides F on each of which is mounted a handle M.

- 4 -

The major part of the surface of the upper plane 3 of the unit 1 is covered with panels or sheets 6 in the form of strips of material with a low coefficient of sliding friction, on which the cassettes can slide without encountering too much resistance. Alternatively, in order to facilitate the movement of the cassettes even more, rotary bodies such as wheels, rollers or balls may be provided on the upper plane 3 of sliding.

The plane 3 of sliding is also defined along its longitudinal sides, that is, the sides perpendicular to the ends 4, 5, by panels 7 which prevent the cassettes from being displaced accidentally and falling from the side of the unit 1.

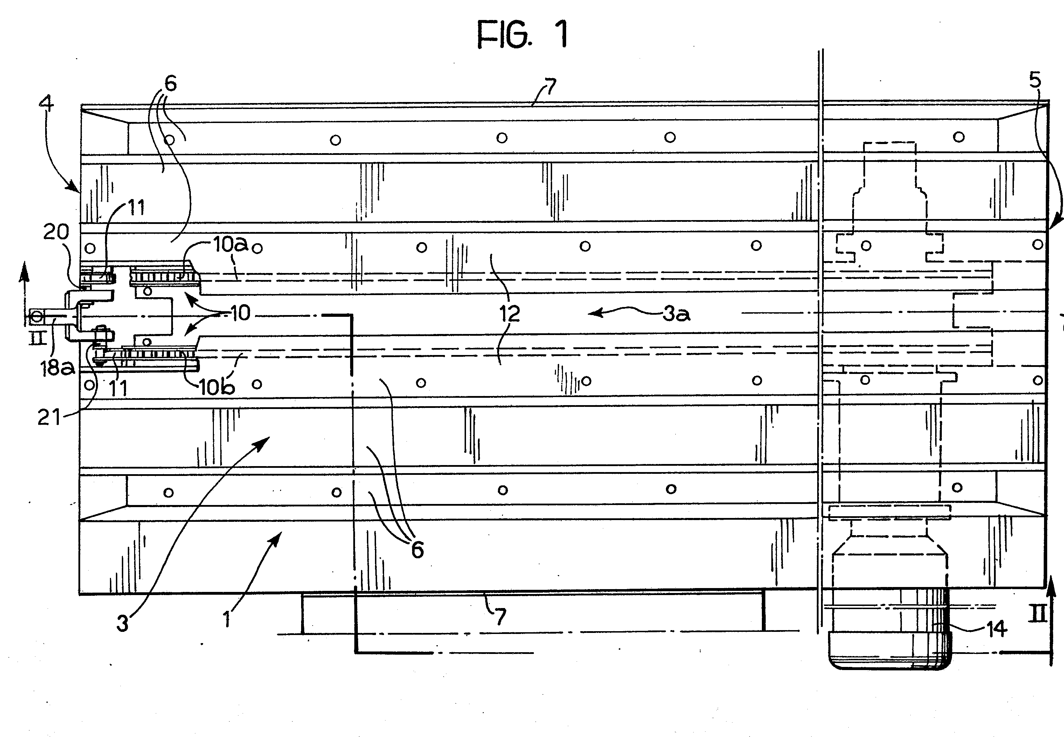

A flexible drive element is generally indicated 10 and is constituted by two endless roller chains 10a, 10b (Figure 1) which are side by side and supported on the body of the unit 1 by a set of return rollers or wheels 11.

As best seen in the simplified view of Figures 3 to 6, the two chains 10a, 10b, that is, the flexible element 10 as a whole, can be seen to have an upper entrainment pass 12 and a lower return pass 13.

The upper entrainment pass 12, constituted by the upper passes of the chains 10a, 10b, extends between the ends 4 and 5 - that is, in the direction of movement of the cassettes - immediately beneath the plane 3, which has a central longitudinal slot 3a.

An electric motor 14 is mounted in the body of the unit 1 beneath the plane 3 of sliding. The motor 14 may be driven in two senses to cause corresponding concordant movements of the chains 10a and 10b.

The motor 14 is usually located adjacent one of the ends of the plane 3 of sliding. In the embodiment illustrated it is the end indicated 5.

Adjacent the opposite end, therefore, in a position which is approximately barycentrically opposite the motor 14, the chains 10a and 10b form two adjacent loops 15. The size of these loops 15 can be adjusted selectively by means of adjusting screws 16 which adjust the position of a movable device 17 on which some of the rollers 11 are mounted. It is thus possible to regulate the tension of the chains 10a, 10b precisely.

The choice of a position for the tensioning unit 16, 17 which is barycentrically opposite that of the motor 14, as well as reducing the overall vertical bulk of the unit 1, has the advantage of not harming the characteristics of sliding of the unit relative to the rail R.

As is best seen in the plan view of Figure 1, the chains 10a, 10b are slightly staggered with respect to their common direction of extension, which is that in which the cassettes are moved.

For example, the chains may be staggered by a distance corresponding approximately to the size of one of their links.

Four hook elements 18a, 18b and 19a, 19b (forming two pairs of corresponding hook elements which can act on the plane 3 of sliding) are mounted on the chains 10a, 10b in the disposition illustrated in Figure 1 with reference to the hook element 18a.

More precisely, each hook element (18a, 18b, 19a, 19b) has two support appendages 20 and 21 each connected to one of the chains flexible element 10. In practice, the two support appendages 20 and 21 both lie in a plane parallel to the plane 3 of sliding of the unit 1.

Since both the chains are moved at the same speed by the motor 14, the support appendages 20 and 21 of each hook element 18a, 18b, 19a, 19b stay at the same relative position whatever position they reach as a result of the movement of the chains. This means that all four hook elements 18a, 18b, 19a, 19b retain the same orientation relative to the plane 3 of sliding and to the unit 1 as a whole, whatever the position they are in at any instant as a result of the movement of the chains caused by the motor 14.

Each pair of hook elements mounted on the flexible element 10 can be seen to include a first hook element 18a, 19a and a second hook element 18b, 19b mounted on the chains 10a, 10b at a distance substantially equal to the length of the cassette, that is, to the distance separating the two opposite sides F of the cassettes themselves.

With reference to the embodiment illustrated in the drawings (see Figures 3 to 6 in particular), the first hook element 18a is upstream of the respective second hook element 18b (downstream hook element) when the flexible element 10 moves in a clockwise sense.

In a complementary manner, the other first hook element 19a is upstream of the corresponding second hook element 19b (downstream hook element) when the flexible element 10 moves in the anticlockwise sense.

Both first hook elements 18a, 19a have an overall hook shape and are thus provided with a sort of tooth (indicated 22 in the case of the hook element 18a illustrated in Figure 2) which can engage, that is, hook with a pulling or pushing relationship, the handles M provided on the opposite sides F of the cassettes of the automatic store.

When it is desired to withdraw a cassette from the corresponding location (compartment) of the store, the unit 1 is brought into such a position as to face one of the ends (the end 4 in the embodiment of Figures 3 to 6) at one of the sides F of the cassette which is to be withdrawn, and from which the respective handle M projects.

The height of the unit 1 is adjusted so that the plane 3 of sliding and hence the upper entrainment pass 12 of the flexible element 10 is practically aligned with the basal plane of the cassette, while the handle M projects slightly towards the end 4 of the plane 3.

In these conditions (Figure 3), the flexible element 10 is held in a position such that all the hook elements 18a, 18b, 19a and 19b are located generally below the plane 3 of sliding.

Subsequently (Figure 4), the motor 14 is activated to make the flexible element 10 (the chains 10a, 10b) slide and cause the raising of one of the "upstream"

- 8 -

hook elements (in the case illustrated, the hook element 18a) and the consequent insertion of the tooth 22 of the latter in the handle M. In the embodiment illustrated, this movement is achieved by the sliding of the flexible element 10 in the clockwise sense.

The motor 14 is operated to continue the sliding movement in the same sense and the hook element 18a, which engages the handle M cooperating therewith so as to pull it, moves along the plane 3 of sliding, pulling the cassette 1 with it.

When, as a result of the movement of the upper pass 12 of the flexible element 10, the hook element 18a comes close to the opposite end 5 of the plane 3, the entire cassette is located on the unit 1. The side F opposite that whose handle M is engaged by the element 18a is also advanced beyond the end 4 of the plane 3 in which the withdrawal operation is effected. More precisely, at the moment when the opposite side advances beyond the end 4, the other "downstream" hook element 18b also projects on the plane 3, so as to come to bear in pushing relationship against the respective side F of the cassette.

In these conditions (Figure 5), the cassette is completely supported and clamped on the unit 1 and can then be transferred either to another storage location or to a consultation plane.

In order to reinsert the cassette in the same location as that from which it was taken, or to discharge it from the unit 1 at the end 4 where it was withdrawn, it suffices to rotate the motor 14 in the opposite sense from that used during the withdrawal.

- 9 -

Thus, the hook element 18a, which remains engaged with the handle M, thrusts the cassette backwards, making it follow a path exactly opposite that followed during the withdrawal operation, so that it disappears beneath the plane 3 of sliding again at the end of its return travel.

In other words, the sequence of operations illustrated schematically in Figures 3 to 5 is repeated in the opposite sense.

Naturally, an entirely identical withdrawal and reinsertion or discharge sequence may be carried out from the other end 5. In this case, the action of hooking of the handle M of the cassette will be carried out by the other hook element provided with a tooth 22, that is, the hook element indicated by the reference 19a.

It will now be assumed that, once the position illustrated in Figure 5 has been reached at the end of the withdrawal operation, it is desired to reinsert or discharge the cassette from the side opposite that at which the withdrawal was effected.

In the example illustrated, one is concerned with the reinsertion or discharge from the side 5 of the cassette withdrawn on the side 4.

For this purpose, the motor 14 is driven in the same sense of rotation as in the withdrawal operation. As a result of the gradual advance of the upper pass 12 of the flexible element 10, the upstream hook element 18a continues to pull the cassette until the handle M engaged thereby is above the end 5. At this point, the hook element 18a, following the chains 10a, 10b which bend downwardly towards the lower pass 13, is also lowered relative to the plane 6 of sliding and is disengaged from the handle M.

However, the entrainment of the cassette continues since the downstream hook element, that is, the hook element 18b, is engaged with the opposite side of the cassette and continues to push the cassette, making it advance towards the end 5.

Thus, the cassette can be discharged or possibly inserted in another storage position.

Preferably, the location of the element 18a, 18b, 19a, 19b may be chosen so that the first hook element (18a, 19a respectively) of each pair is mounted immediately adjacent the second element (19b, 18b respectively) of the other pair. If this arrangement is adopted, at the end of the operation of discharging the cassette from the side opposite that at which it had been withdrawn, the first element (18a, 19a) of each pair immediately follows the second hook element (18b, 19b) of the other pair in moving downwardly beneath the plane 3, so that there is an instantaneous thrust "on the shoulders" of the cassette just discharged, facilitating its precise alignment and positioning for subsequent withdrawal.

In a manner entirely similar to that explained in sequences of Figures 3 to 6, a cassette may be withdrawn from the end 5 as a result of a drawing action exerted along the plane 3 of sliding by the (first) hook element 19a of the other pair, and then pushed off the carriage 1 at the opposite side 4 as a result of the entrainment action (or more precisely,

- 11 -

the thrust) exerted by the corresponding hook element 19b.

In both senses of movement, the "downstream" hook element 18b, 19b is able, to move the cassette even when the corresponding "upstream" element 18a, 19a has disappeared beneath the plane 6 of sliding and disengaged the handle M of the cassette.

Naturally, the principle of the invention remaining the same, the constructional details and forms of embodiment may be varied widely with respect to that described and illustrated, without thereby departing from the scope of the present invention.

For example, it is possible to make devices according to the invention which include a greater number of pairs of hook elements located at a distance equal to the length of the transport unit to be moved.

0253775

- 12 -
<u>CLAIMS</u>

1. Device for moving in a predetermined direction on a sliding plane (3) load units having two opposite sides (F) provided with respective handles (M) and being intended for withdrawal from and insertion into storage compartments, characterised in that it comprises:
- an endless flexible element (10) slidable in two senses and having an upper entrainment pass (12) oriented in the predetermined direction and extending adjacent the sliding plane (3), and a lower return pass (13) extending in a position spaced from the sliding plane (3),
- a motor (14) for driving the movement of the flexible element (10) selectively in each of the two senses, and
- at least one first (18a, 18b) and one second (19a, 19b) pair of hook elements fixed to the flexible element (10), each pair (18a, 18b, 19a, 19b) comprising a first hook element (18a, 19a) which can engage a handle (M) provided on one of the opposite sides (F) of the load unit which is being moved, and a second hook element (18b, 19b) which can cooperate in pushing relationship with the other of the opposite sides of the same load unit.

2. Device according to Claim 1, characterised in that the first (18a, 19a) and second (18b, 19b) hook elements in each of the pairs are fixed to the flexible element (10) at a distance approximately equal to the distance between the opposite sides (F) of the load units.

3. Device according to Claim 1 or Claim 2, characterised in that the first hook element (18a, 19a) of each pair is mounted immediately adjacent the second hook element (19b, 18a) of another pair.

4.    Device according to any one of Claims 1 to 3, characterised in that the hook elements (18a, 18b; 19a, 19b) are mounted on the flexible element (10) in a disposition such that each hook element (18a, 18b; 19a, 19b) maintains a substantially constant orientation during the movement of the flexible element (10).

5.    Device according to Claim 4, characterised in that the flexible element (10) comprises essentially two endless, flexible strip bodies (10a, 10b) located side by side and slightly staggered in the predetermined direction, and in that each of the hook elements (18a, 18b; 19a, 19b) has support appendages (20, 21) connected to both of the strip bodies (10a, 10b) in positions aligned with each other and parallel to the plane (3) of sliding.

6.    Device according to Claim 5, characterised in that the two flexible strip bodies are constituted by chains (10a, 10b).

7.    Device according to any one of Claims 1 to 6, characterised in that the flexible element (10) forms a loop (15) in the return pass (13) and in that a tensioning device (16, 17) is provided to vary the amplitude of this loop (15) selectively so as to regulate the tension of the flexible element (10).

# FIG. 1

0253775

FIG. 2

# FIG. 3

# FIG. 4

# FIG. 5

# FIG. 6

0253775

| | DOCUMENTS CONSIDERED TO BE RELEVANT | | EP 87830207.4 |
|---|---|---|---|

| Category | Citation of document with indication, where appropriate, of relevant passages | Relevant to claim | CLASSIFICATION OF THE APPLICATION (Int. Cl.4) |
|---|---|---|---|
| A | EP - A1 - 0 136 189 (LAPOUYADE S. A.)<br>* Fig. 1-3 * | | B 65 G 1/12 |
| A | DE - A - 2 053 379 (OHLSON)<br>* Fig. 4 * | | |

| TECHNICAL FIELDS SEARCHED (Int. Cl.4) |
|---|
| B 65 G<br>A 47 B 63/00 |

The present search report has been drawn up for all claims

| Place of search | Date of completion of the search | Examiner |
|---|---|---|
| VIENNA | 28-09-1987 | PISSENBERGER |